# EUROPEAN PATENT SPECIFICATION

(11) **EP 1 901 321 B1**
(45) Date of publication and mention of the grant of the patent: **21.08.2013**
(21) Application number: 07001200.0
(22) Date of filing: 19.01.2007
(51) Int. Cl.: H01H 13/83

(54) **Key assembly and mobile terminal having the same**
Tastenanordnung und damit ausgerüstetes mobiles Endgerät
Clavier et terminal portable incorporant un tel clavier

(30) Priority: 12.09.2006 KR 20060088268
(43) Date of publication of application: 19.03.2008
(73) Proprietor: LG Electronics Inc., Yongdungpo-gu Seoul 150-010 (KR)
(72) Inventor: Hong, Sang-Ki, Gyeonggi-Do (KR)
(74) Representative: Beyer, Andreas

(56) References cited:
- EP-A- 1 571 682
- EP-A- 1 724 801
- JP-A- 2005 268 165
- US-A- 5 225 818
- US-A- 5 568 367
- US-A1- 2003 095 398
- US-A1- 2005 150 753

## Description

### BACKGROUND OF THE INVENTION

### Field of the Invention

The present invention relates to a key assembly for a mobile terminal, and a mobile terminal having the same.

### Description of Related Art

A mobile terminal is one of many portable electronic devices capable of enabling a user to wirelessly transmit/receive data or to process information while being moved. As the mobile terminal becomes lighter and slimmer in order for the user to conveniently carry it, the mobile terminal requires a mechanical structure to implement various functions in a small and limited device.

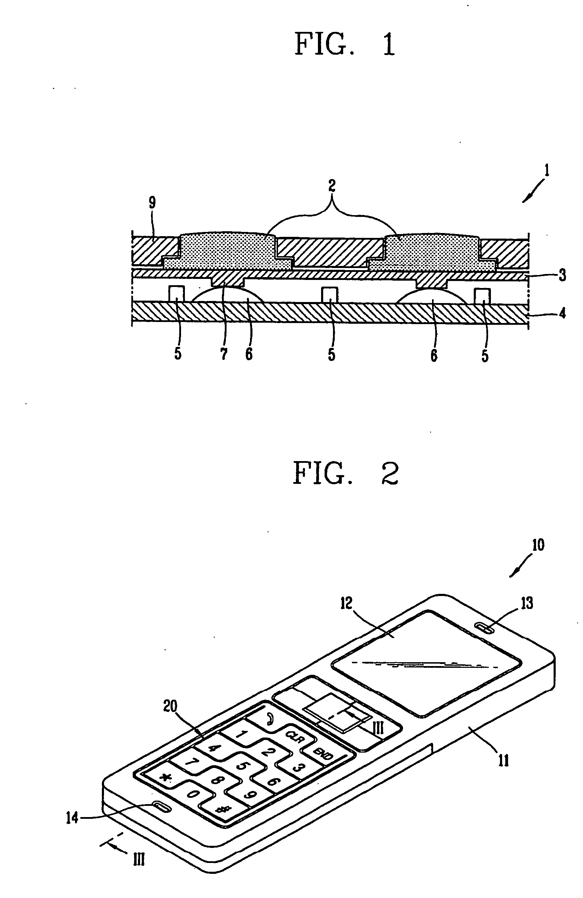

Generally, the mobile terminal is provided with a key assembly having a plurality of key buttons to input numbers, characters, and other control commands by the user. FIG. 1 is a sectional view showing a key assembly in accordance with the related art. As shown, the related art key assembly 1 comprises a plurality of key buttons 2 exposed outside the mobile terminal and is pressably-operated. A switch 6 is arranged below the key buttons 2 and is mounted on an upper surface of a circuit board 4, for receiving a signal as the key buttons 2 are pressed. A pad 3 is attached to a lower surface of the key buttons 2 and is elastically transformed when the key buttons 2 are pressed, for pressurizing the switch 6 to thereby input a signal. A pressurizing protrusion 7 for pressurizing the switch 6 as the key buttons 2 are pressed is disposed at the pad 3.

The key buttons 2 are arranged on a case 9 so as to be outwardly exposed, and have symbols such as numbers, characters, or other command prompts, on the upper surfaces of the key buttons 2. The symbols are printed as a negative type to selectively pass light generated from light emitting diodes (LEDs) 5, which will be explained later, thereby implementing a backlighting of the symbols.

When a user pushes the key buttons 2, the pressurizing protrusion 7 of the pad 3 is pressed against switch 6. Accordingly, the user can input the desired keys.

A plurality of LEDs 5 for illuminating the key buttons 2 are upwardly protruding near the switches 6 of the circuit board 4. The symbols on the key buttons 2 are illuminated by the LEDs 5, so that the user can input the symbols even in a dark place.

However, in the related key assembly art, light is not uniformly distributed because of the distance between the LEDs 5 and the key buttons 2. Furthermore, in order to enhance the brightness of the key buttons 2, the number of the LEDs 5 have to be increased, thereby requiring a larger power consumption.

In order to solve the above problems, the Korean Patent Publication No. 10-2003-89182 discloses a technique for arranging a light guiding plate on an upper surface of a main board having dome switches, the light guiding plate having passing holes in correspondence with the dome switches.

However, in the Korean Patent Publication No. 10-2003-89182, the number of the passing holes corresponds to the number of the dome switches, thereby requiring a difficult processing operation. Furthermore, a large amount of light disappears in the light guiding plate, thereby not sufficiently illuminating each of the key buttons.

Korean Patent Publication No. 10-2005-64351 discloses a technique that a light guiding plate is attached to a lower surface of a keypad and a light emitting device is mounted on an additional circuit board attached to the light guiding plate. However, since the light emitting device is installed separately from the main board, an additional structure for fixing the light emitting device and an electric connection unit are required. Accordingly, an entire process is complicated and a fabrication cost is increased.

EP-A-1 724 801, published after the priority date of the present application, discloses a keypad assembly for a portable terminal including a light guiding sheet arranged below a plurality of key buttons and overlaying a plurality of switches associated with the key buttons. EP-A-1 724 801 is silent on whether the light guiding sheet is affixed to a circuitry supporting substrate, and if so, is silent on how the light guiding sheet is affixed to the substrate.

US-A-5 568 367, US-A-2005/0150753, EP-A-1 571 682 and JP-A-2005-268165 all disclose keypad assemblies having light guiding sheets which are not affixed to a circuitry supporting substrate and/or do not overlay an upper portion of each of the plurality of switches. EP-A-1571682 further discloses a translucent resin film to which is applied a luminous paint or a light shielding material in such a manner as to avoid portions corresponding to switches.

US-A-5 225 818 relates to a data entry control panel including a transparent diffuser block preferably fabricated from polycarbonate. The diffuser block has apertures for key buttons, such that each key button may come into contact with an associated switch arranged below the diffuser block. A plurality of light emitting diodes are used to illuminate the diffuser block from below.

### BRIEF SUMMARY OF THE INVENTION

According to principles of this invention, a key assembly capable of reducing the number of optical sources and an amount of power consumption by applying a light guiding member to a key assembly, and a mobile terminal having the same are provided.

To achieve these and other advantages and in accordance with the purpose of the present invention, as embodied and broadly described herein, there is provided a key assembly having a plurality of key buttons, a light guiding sheet arranged below at least one of the plurality of key buttons, a light emitter to generate light into an edge of the light guiding sheet, the light guiding sheet directing light from the light emitter towards at least one of the plurality of key buttons, a circuitry supporting substrate formed below the light guiding sheet; and a plurality of switches formed on the circuitry supporting substrate, each of the plurality of switches corresponding to one of the plurality of key buttons. The light guiding sheet overlays an upper portion of each of the plurality of switches. The light emitter is mounted on an upper surface of the circuitry supporting substrate. The light guiding sheet is attached onto the circuitry supporting substrate by an adhesive or a double sided tape deposited onto a lower surface thereof along an edge thereof.

In another aspect, the light guiding sheet is arranged below all of the plurality of key buttons and the light guiding sheet directs light from the light emitter towards all of the plurality of key buttons.

In a further aspect, the key assembly includes a reflective layer located at a perimeter of the light guiding sheet for redirecting light from the light emitter away from the perimeter.

In still another aspect, each of the plurality of switches is formed to have a dome shape, and the light guiding sheet is formed of a flexible material that prevents adjacent switches from being pressed when a switch corresponding to one of the key buttons is pressed.

In still another aspect, the plurality of key buttons are formed as an integral pad, and the pad includes an opaque layer forming an appearance and having symbols penetratingly formed in correspondence with numbers or characters to be inputted, the opaque layer defining an upper surface for each of the plurality of buttons. The pad also includes a transparent layer formed at a lower surface of the opaque layer and integral with the opaque layer and a plurality of pressurizing protrusions formed at a lower surface of the transparent layer. Each of the pressurizing protrusions correspond to one of the plurality of key buttons and one of the plurality of switches. The opaque layer may be formed of a metallic plate and the transparent layer may be formed of silicon or silicon rubber co-injection molded onto the metallic plate.

According to another aspect of the present invention, a mobile terminal is provided that incorporates one or more of the above features of the key assembly.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
- FIG. 1: is a sectional view showing a key assembly for a mobile terminal in accordance with the related art;
- FIG. 2: is a perspective view showing a mobile terminal according to an exemplary embodiment of the present invention;
- FIG. 3: is a sectional view taken along line III-III of FIG. 2; and FIG. 3A is a close-up view of a portion of the sectional view of FIG 3; and
- FIG. 4: is a disassembled perspective view of a key assembly of FIG. 2.

### DETAILED DESCRIPTION OF THE INVENTION

Reference will now be made in detail to the preferred embodiments of the present invention, examples of which are illustrated in the accompanying drawings. Hereinafter, a key assembly and a mobile terminal having the same according to the present invention will be explained in more detail.

FIG. 2 is a perspective view showing a mobile terminal according to an exemplary embodiment of the present invention. As shown in FIG. 2, a mobile terminal 10 is provided with a terminal body 11 on which a key assembly 20 is installed.

A display 12 for displaying video information is provided at a front surface of the terminal body 11, and the key assembly 20 is provided at one side of the display 12. A receiver or a speaker 13 for outputting a voice signal may be mounted at an upper end of the terminal body 11, and a microphone 14 for inputting a voice signal may be mounted at a lower end of the terminal body 11.

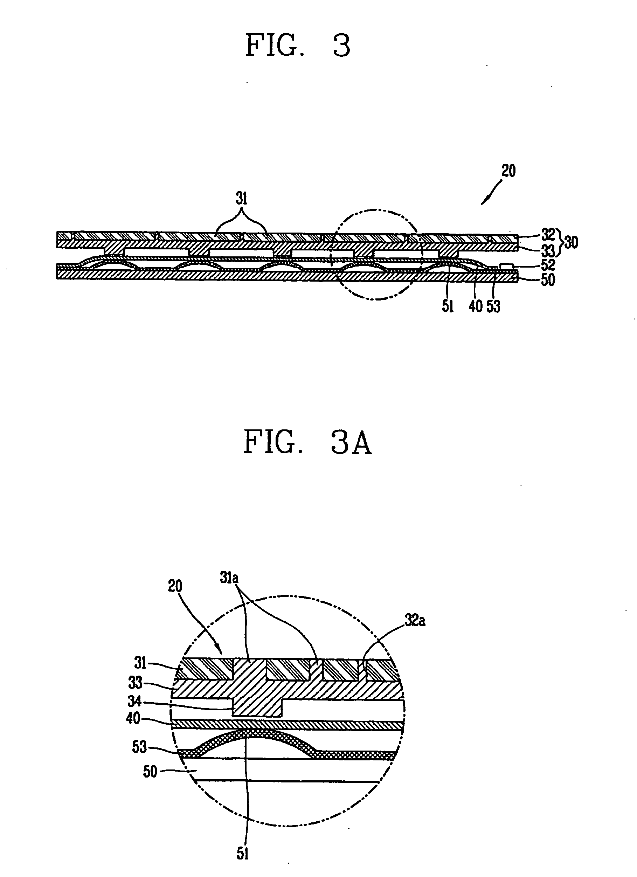

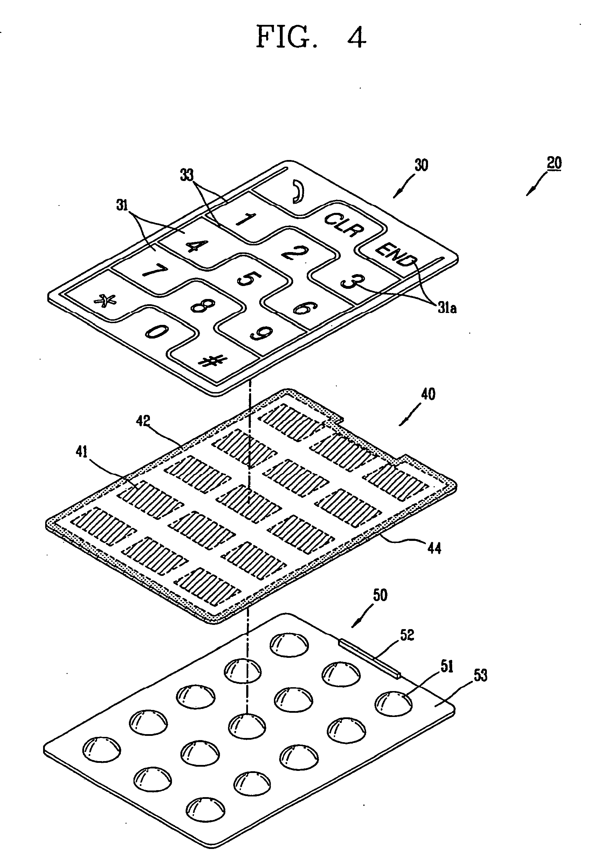

FIG. 3 is a sectional view taken along line III-III of FIG. 2, and FIG. 4 is a disassembled perspective view of a key assembly of FIG. 2. As shown in FIGS. 3 and 4, a plurality of key buttons 31 are arranged to be exposed outside the mobile terminal 10 and may be formed as one integrated pad 30.

In particular, as best seen in FIG. 4, the pad 30 includes an opaque layer 32 forming an appearance of key buttons 31 and having symbols 31a penetratingly formed thereon. The symbols correspond with numbers or characters to be inputted. A transparent layer 33 is integrally formed at a lower surface of the opaque layer 32 and a plurality of pressurizing protrusions 34 is formed at a lower surface of the transparent layer 33, each of which corresponds to one of the key buttons 31. The pressurizing protrusion 34 is for pressurizing a switch 51 that will be later explained.

The opaque layer 32 may be formed of a metallic plate having an excellent rigidity and durability, and the transparent layer 33 may be formed of silicon or silicon rubber co-injection molded onto the metallic plate. Alternatively, the opaque layer 32 may be formed of a transparent plastic and symbols representing numbers or characters to be inputted when the key buttons 31 are pressed may be printed on an upper surface, a lower surface, or a middle portion of each of the key buttons 31 as a negative type for backlighting.

In order to prevent adjacent key buttons 31 from being pressed when one key button 31 is pressed, and in order to easily recognize the key buttons 31, the opaque layer 32 is formed with a cut-shape 32a in the opaque layer 32. The transparent layer 33 fills in a cut-out portion 31a by molding, thereby preventing foreign materials from being introduced into the cut-out portion 31a. Also, when light is generated from a lower portion of the pad, dividing lines for dividing the key buttons 31 from each other are visible.

A circuitry supporting substrate, such as printed circuit board 50, is provided at a lower portion of the pad 30, and has dome-switches 51 arranged in correspondence with each of the key buttons 31 on an upper surface thereof. Preferably, a thin flexible circuitry supporting substrate or board may be used as the board 50, thereby reducing an entire thickness of the mobile terminal.

A light guiding sheet 40 for guiding light generated from a light emitter 52 mounted at a board 50 to each of the key buttons 31 is disposed on an upper surface of the board 50 and a plurality of switches 51. As shown in FIGS. 3 and 4, the light guiding sheet 40 is integrally formed so as to cover the board 50 and the switches 51 at one time. Also, the light emitter 52 is adjacent to a lateral surface of the light guiding sheet 40 so that light generated from the light emitter 52 arranged on one surface of the board 50 can be made to be incident onto the lateral surface of the light guiding sheet 40. A planar surface 53 may be provided to connect each of the plurality of switches together and the planar surface 53 may be made of reflective material or have a reflective layer formed thereon.

By mounting the light emitter 52 on the board 50, the fabrication process of the key assembly 20 can be simplified. As the light emitter 52, an optical source such as a LED having a high brightness in contrast to the power consumed is preferably used. Furthermore, since the light guiding sheet 40 does not shield light, light generated from one light emitter 52 can be transmitted to all of the key buttons. Accordingly, the number of optical sources and power can be reduced.

Preferably, the light guiding sheet 40 is formed of a flexible material that can be easily deformed so as to prevent adjacent key buttons 31 from being pressed when one specific key button 31 is pressed. When the key buttons 31 are pressed, the corresponding pressurizing protrusion 34 presses the light guiding sheet 40, and the light guiding sheet 40 presses the switch 51. Accordingly, the light guiding sheet 40 moves with the switch 51. When the pressing force applied to the key buttons 31 is removed, the light guiding sheet 40 is restored to the original position by an elastic force of the switch 51.

The light guiding sheet 40 is formed so that light incident from a lateral surface thereof can move towards a front surface thereof through reflection. Also, the light guiding sheet 40 is provided with reflection pattern portions 41 for intensively guiding light to each of the key buttons 31. Each of the reflection pattern portions has an area corresponding to each of the switches 51. The reflection pattern portion 41 is implemented by forming minute scratches or pits at a lower surface of the light guiding sheet 40 by an etching, laser processing, or other suitable processes.

The light guiding sheet 40 is attached onto the board by an adhesive or a double sided tape 42 deposited onto a lower surface thereof along an edge thereof, thereby facilitating an assembly.

In addition, a reflective layer 44 may also be provided at a perimeter of the light guiding sheet 40 to redirect light from the light emitter 52 away from the perimeter and towards the plurality of button keys 31. As seen in FIG. 4, the reflective layer 44 may be formed substantially above the adhesive layer 42.

The light guiding sheet 40 may be formed of poly-carbonate or poly-urethane, or other suitable material with a thickness of approximately 0.125mm, thereby making the mobile terminal slim.

Hereinafter, an operation of the key assembly according to the present invention will be explained. Referring to FIG. 3, light generated from the light emitter 52 is made to be incident onto the light guiding sheet 40. Then, the light moves in the light guiding sheet 40 through a total reflection. As the light moves towards each of the key buttons 31, characters or numbers 31a of the key buttons 31 are illuminated.

Referring to FIG. 4, the light guiding sheet 40 is directly attached onto the board 50, thereby requiring no additional assembly process therebewteen. Since the light guiding sheet 40 is formed so as to cover both the board 50 and the switch 51, light generated from the light emitter 52 is not shielded in the light guiding sheet 40. Accordingly, the number of the light emitters 52 can be reduced, and power consumption can be decreased.

As aforementioned, in the key assembly and the mobile terminal having the same, the light guiding sheet for guiding light generated from the light emitter mounted at the board to the key buttons is disposed on an upper surface of the switch. Accordingly, light generated from the light emitter 52 is not shielded in the light guiding sheet 40. Accordingly, the number of the light emitters 52 can be reduced, and power consumption can be decreased. While only a single light emitter 52 has been shown, it is understood that more than one light emitter may be provided and still minimize the power consumption for illuminating the button keys 31.

Furthermore, since the light emitter is mounted at the board, an additional component for installing the light emitter is not required, and an entire assembly process is simplified.

In the exemplary embodiment, a mobile terminal having an integrated terminal body was provided. However, the key assembly of the present invention may also be applied to a folder type or a slide type mobile terminal having at least two bodies.

## Claims

1. A key assembly (20) comprising:
a plurality of key buttons (31);
a light guiding sheet (40) arranged below at least one of the plurality of key buttons;
a light emitter (52) adjacent to a lateral surface of the light guiding sheet (40) to generate light into an edge of the light guiding sheet, the light guiding sheet directing light from the light emitter towards at least one of the plurality of key buttons (31);
a circuitry supporting substrate (50) formed below the light guiding sheet; and
a plurality of switches (51) formed on the circuitry supporting substrate, each of the plurality of switches corresponding to one of the plurality of key buttons (31),
wherein the light emitter (52) is mounted on an upper surface of the circuitry supporting substrate (50),
and wherein the light guiding sheet (40) overlays an upper portion of each of the plurality of switches (51) and is integrally attached onto the circuitry supporting substrate (50) so as to cover both the circuitry supporting substrate (50) and the switches (51) by an adhesive (42) or a double sided tape deposited onto a lower surface thereof along an edge thereof, and further, each of the reflection pattern portions (41) having an area corresponding to each of the switches (51).

2. The key assembly according to claim 1,
wherein the light guiding sheet (40) is arranged below all of the plurality of key buttons (31) and the light guiding sheet (40) directs light from the light emitter towards all of the plurality of key buttons.

3. The key assembly according to claim 2, further comprising:
a reflective layer (44) located at a perimeter of the light guiding sheet for redirecting light from the light emitter away from the perimeter.

4. The key assembly of claim 3,
wherein each of the plurality of switches (51) is formed to have a dome shape, and the light guiding sheet (40) is formed of a flexible material that prevents adjacent switches from being pressed when a switch corresponding to one of the key buttons is pressed.
wherein a plurality of reflection pattern portions (41) for intensively guiding light from the light emitter to each of the key buttons is formed at a surface of the light guiding sheet in correspondence with the plurality of key buttons

5. The key assembly of claim 1, wherein the plurality of key buttons (31) is formed as an integral pad, and the pad comprises:
an opaque layer (32) forming an appearance and having symbols penetratingly formed in correspondence with numbers or characters to be inputted, the opaque layer defining an upper surface for each of the plurality of buttons;
a transparent layer (33) formed at a lower surface of the opaque layer and integral with the opaque layer; and
a plurality of pressurizing protrusions (34) formed at a lower surface of the transparent layer, each pressurizing protrusion corresponding to one of the plurality of key buttons and one of the plurality of switches.

6. The key assembly of claim 5,
wherein the opaque layer (32) is formed of a metallic plate, and the transparent layer is formed of silicon or silicon rubber co-injection molded onto the metallic plate.

7. A mobile terminal comprising the key assembly according to any one of claims 1 to 6.

## Patentansprüche

1. Tastenanordnung (20), mit:
mehreren Tasten (31),
einer Lichtleitlage (40), die unterhalb wenigstens einer der mehreren Tasten angeordnet ist,
einem Lichtemitter (52) neben einer Seitenfläche der Lichtleitlage (40) zum Erzeugen von Licht in einen Rand der Lichtleitlage, wobei die Lichtleitlage Licht vom Lichtemitter zu wenigstens einer der mehreren Tasten (31) leitet,
einem Schaltkreisträgersubstrat (50), das unterhalb der Lichtleitlage ausgebildet ist, und
mehreren auf dem Schaltkreisträgersubstrat ausgebildeten Schaltern (51), wobei jeder der mehreren Schalter jeweils einer der mehreren Tasten (31) entspricht,
wobei der Lichtemitter (52) auf einer Oberseite des Schaltkreisträgersubstrats (50) befestigt ist,
und wobei die Lichtleitlage (40) einen oberen Abschnitt eines jeden der mehreren Schalter (51) überdeckt und mittels eines Klebers (52) oder eines doppelseitigen Klebebands, welcher bzw. welches auf ihrer Unterseite entlang eines Randes aufgebracht ist, integral auf dem Schaltkreisträgersubstrat (50) befestigt ist, um sowohl das Schaltkreisträgersubstrat (50) als auch die Schalter (51) zu bedecken, und wobei ferner mehrere Reflektionsmusterabschnitte (41) zum intensiven Leiten von Licht aus dem Lichtemitter zu jeder der Tasten an einer Fläche der Lichtleitlage korrespondierend zu den mehreren Tasten ausgebildet sind, wobei jeder der Reflektionsmusterabschnitte (41) einen jedem der Schalter (51) entsprechenden Bereich aufweist.

2. Tastenanordnung nach Anspruch 1,
bei der die Lichtleitlage (40) unterhalb aller der mehreren Tasten (31) angeordnet ist und die Lichtleitlage (40) Licht aus dem Lichtemitter zu allen der mehreren Tasten leitet.

3. Tastenanordnung nach Anspruch 2, ferner aufweisend:
eine reflektierende Schicht (44), die an einem Umfang der Lichtleitlage angeordnet ist, um Licht aus dem Lichtemitter von dem Umfang weg zu richten.

4. Tastenanordnung nach Anspruch 3,
bei der jeder der mehreren Schalter (51) kuppelförmig ausgebildet ist und die Lichtleitlage (40) aus einem flexiblen Material gebildet ist, welches verhindert, dass benachbarte Schalter gedrückt werden, wenn ein einer der Tasten entsprechender Schalter gedrückt wird.

5. Tastenanordnung nach Anspruch 1, bei der die mehreren Tasten (31) als einstückige Unterlage ausgebildet sind und die Unterlage aufweist:
eine opake Schicht (32), welche das Erscheinungsbild bildet und Symbole hat, welche entsprechend den einzugebenden Ziffern oder Zeichen diese Schicht durchdringend ausgebildet sind, wobei die opake Schicht eine Oberseite für jede der mehreren Tasten bildet,
eine transparente Schicht (33), die an einer Unterseite der opaken Schicht und einstückig mit der opaken Schicht ausgebildet ist, und
mehrere Druckvorsprünge (34), die an einer Unterseite der transparenten Schicht ausgebildet sind, wobei jeder Druckvorsprung mit einer der mehreren Tasten und einem der mehreren Schalter korrespondiert.

6. Tastenanordnung nach Anspruch 5,
bei der die opake Schicht (32) aus einer Metallplatte gebildet ist und die transparente Schicht aus Silikon oder Silikongummi gebildet ist, welches oder welcher im Einsatzspritzguss auf die Metallplatte geformt ist.

7. Mobiles Endgerät mit der Tastenanordnung nach einem der Ansprüche 1 bis 6.

## Revendications

1. Assemblage de touches (20) comprenant :
une pluralité de touches (31) ;
une feuille de guidage de lumière (40) disposée au-dessous d'au moins l'une parmi la pluralité de touches ;
un émetteur de lumière (52) adjacent à une surface latérale de la feuille de guidage de lumière (40) pour générer une lumière dans un bord de la feuille de guidage de lumière, la feuille de guidage de lumière dirigeant la lumière depuis l'émetteur de lumière vers au moins l'une parmi la pluralité de touches (31) ;
un substrat de support de circuiterie (50) formé au-dessous de la feuille de guidage de lumière ; et
une pluralité de commutateurs (51) formés sur le substrat de support de circuiterie, chacun parmi la pluralité de commutateurs correspondant à l'une parmi la pluralité de touches (31),
dans lequel l'émetteur de lumière (52) est monté sur une surface supérieure du substrat de support de circuiterie (50),
et dans lequel la feuille de guidage de lumière (40) chevauche une partie supérieure de chacun parmi la pluralité de commutateurs (51) et est fixée solidairement sur le substrat de support de circuiterie (50) de façon à couvrir à la fois le substrat de support de circuiterie (50) et les commutateurs (51) par un adhésif (42) ou un ruban adhésif double face déposé sur une surface inférieure de celle-ci le long d'un bord de celle-ci, et en outre dans lequel une pluralité de parties de motifs de réflexion (41) destinées à guider de manière intensive la lumière de l'émetteur de lumière vers chacune des touches sont formées au niveau d'une surface de la feuille de guidage de lumière en correspondance avec la pluralité de touches, chacune des parties de motifs de réflexion (41) ayant une zone correspondant à chacun des interrupteurs (51).

2. Assemblage de touches selon la revendication 1,
dans lequel la feuille de guidage de lumière (40) est disposée au-dessous de la totalité de la pluralité de touches (31) et la feuille de guidage de lumière (40) dirige la lumière depuis l'émetteur de lumière vers la totalité de la pluralité de touches.

3. Assemblage de touches selon la revendication 2, comprenant en outre :
une couche réfléchissante (44) placée au niveau d'un périmètre de la feuille de guidage de lumière pour rediriger la lumière depuis l'émetteur de lumière loin du périmètre.

4. Assemblage de touches selon la revendication 3,
dans lequel chacun parmi la pluralité de commutateurs (51) est formé pour présenter une forme de dôme, et la feuille de guidage de lumière (40) est formée d'un matériau souple qui empêche que les commutateurs adjacents soient enfoncés lorsqu'un commutateur correspondant à l'une des touches est enfoncé.

5. Assemblage de touches selon la revendication 1, dans lequel la pluralité de touches (31) forment un clavier solidaire, et le clavier comprend :
une couche opaque (32) formant une apparence et comportant des symboles formés par pénétration correspondant à des numéros ou des caractères destinés à être délivrés en entrée, la couche opaque définissant une surface supérieure pour chacune parmi la pluralité de touches ;
une couche transparente (33) formée au niveau d'une surface inférieure de la couche opaque et solidaire de la couche opaque ; et
une pluralité de saillies de pression (34) formées au niveau d'une surface inférieure de la couche transparente, chaque saillie de pression correspondant à l'une parmi la pluralité de touches et à l'un parmi la pluralité de commutateurs.

6. Assemblage de touches selon la revendication 5,
dans lequel la couche opaque (32) est formée d'une plaque métallique, et la couche transparente est formée de silicone ou de caoutchouc de silicone moulé par co-injection sur la plaque métallique.

7. Terminal mobile comprenant l'assemblage de touches selon l'une quelconque des revendications 1 à 6.
